# EUROPÄISCHE PATENTSCHRIFT

(11) **EP 0 414 135 B1**
(45) Veröffentlichungstag und Bekanntmachung des Hinweises auf die Patenterteilung: **05.01.1994**
(21) Anmeldenummer: 90115733.9
(22) Anmeldetag: 17.08.1990
(51) Int. Cl.: B05D 3/04, F26B 13/10, B05C 9/14, B29C 35/16, D06N 7/00

(54) **Verfahren und Vorrichtung zur Herstellung von Kunststoffolien mit rasterförmig aufgedruckten Klebstoffpunkten**
Printing of an adhesive dot matrix on a plastic web, and machine therefore
Procédé et appareil pour l'impression d'adhésif à matrice de points

(30) Priorität: 21.08.1989 DE 3927570
(43) Veröffentlichungstag der Anmeldung: 27.02.1991
(73) Patentinhaber: Hänsel Textil GmbH & Co., D-58636 Iserlohn (DE)
(72) Erfinder: Schumann, Karl Heinz, D-5870 Hemer (DE); Preuss, Hans-Jürgen, D-5750 Menden (DE)
(74) Vertreter: Patentanwälte Dr. Solf & Zapf

(56) Entgegenhaltungen:
- EP-A- 0 081 926
- EP-A- 0 238 014
- AU-B- 461 191
- DE-A- 2 301 938
- US-A- 4 495 217
- US-A- 4 505 951
- US-A- 4 534 120
- US-A- 4 698 914

## Beschreibung

In der EP-A- 0 238 014 werden thermoplastische Kunststoffolien beschrieben, die auf mindestens einer Seite nach dem Pastenpunktdruckverfahren rasterförmig aufgebrachte, verfestigte Schmelzkleberpunkte aufweisen. Die Folien sollen mit anderen Substraten z. B. mit textilen Stoffbahnen mit Hilfe der wieder aktivierten Klebstoffpunkte verbunden werden.

Die Herstellung der bekannten thermoplastischen Folien erfolgt, indem auf die Folien rasterförmig Schmelzkleberpunkte aus einem Thermoplast und/oder Duroplast nach dem Pastenpunktdruckverfahren aufgedruckt werden, und zwar in Form einer wässrigen Dispersionspaste. Nach dem Aufdrucken wird durch Einwirkung von Wärme auf die Folie die Pastendispersion der Klebstoffpunkte getrocknet und anschließend der Kunststoffbestandteil der Klebstoffpunkte durch Einwirkung von erhöhter Temperatur auf der Folie gesintert bzw. ausgeliert. Danach wird gekühlt, so daß eine Folie mit verfestigten, auf der Folie haftenden Klebstoffpunkten vorliegt.

Es hat sich gezeigt, daß durch die Einwirkung von Feuchtigkeit aus der Pastendispersion und/oder Wärme auf die Folie die Folie zum Einrollen und/oder Krumpfen und/oder Verziehen od. dgl. neigt. In der genannten Druckschrift sind Verfahrensmaßnahmen genannt mit denen es gelingt, bei thermoplastischen Folien, insbesondere bei Membranfolien den negativen Einfluß des Wassers und erhöhter Temperatur zu kompensieren. Es wird kurz hinter dem Aufdrucken der Pastendispersionspunkte mit Düsen Heißluft sowohl auf die Ober- als auch auf die Unterseite der Folie im Bereich der Kanten geblasen, so daß sich sehr schnell ein Gleichgewicht im Feuchtigkeitsgehalt beider Folienseiten einstellt. Die Heißluftzufuhr ist regelbar. Zudem wird vorgesehen, daß die Folie beim Sintern bzw. Ausgelieren des Kunststoffs der Klebstoffpunkte genadelt gelagert und kontinuierlich ohne Zugspannung in Transportrichtung transportiert wird.

Die bekannten Mittel sind jedoch nicht ausreichend materialbezogen variabel.

Aus der DE-A-2 301 938 ist ein Verfahren und eine Vorrichtung zur Heißlufttrockung einer naßbehandelten Warenbahn bekannt. Demnach wird vorgeschlagen, in einer nachgeschalteten Trockungszone zur Erhöhung der Krumpfung der Warenbahn beidseitig auf die Bahn Heißluft aufzublasen. Da durch diese Maßnahme die Warenbahn mit wesentlich geringerem Druck auf einem luftdurchlässigen Träger aufliegt, besitzt sie die Möglichkeit, frei zu krumpfen.

Aus der US-A-4 698 914 ist ein Verfahren zum Setzen/Trocknen einer flexiblen Materialbahnbeschichtung bekannt. Dabei ist vorgesehen, die Materialbahn durch aufeinanderfolgendes Anblasen und Ansaugen in einer definierten Wellenbewegung durch eine Trockungsvorrichtung zu leiten. Hierdurch soll erreicht werden, daß die Beschichtung auf der Materialbahn fehlerfrei an die Oberfläche der Materialbahn antrocknet.

Aufgabe der Erfindung ist, ein Verfahren und eine Vorrichtung zu schaffen, mit denen beim Aufdrucken und Verfestigen der nach dem Pastenpunktdruckverfahren rasterförmig in Form einer wässrigen Dispersion aufgebrachten Klebstoffpunkte auf die Folie mit einfachen Mitteln materialbezogen derart eingewirkt werden kann, daß das fertige abgekühlte Folienprodukt ohne Krumpfungen, Wellungen, Verzug od. dgl. vorliegt.

Diese Aufgabe wird durch die Merkmale des Anspruchs 1 und 16 gelöst. Anhand der Zeichnungen wird die Erfindung im folgenden näher erläutert.

Es zeigen:

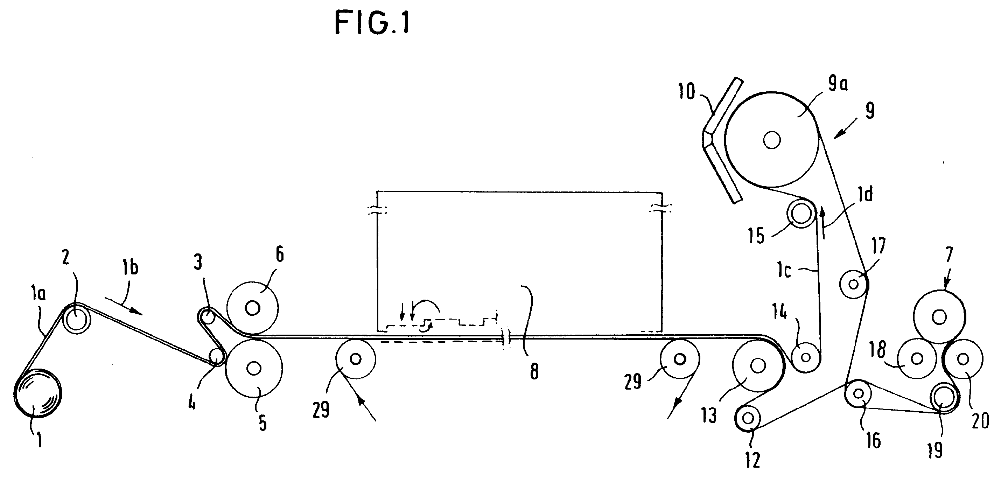

- Fig. 1: schematisch eine Seitenansicht einer erfindungsgemäßen Vorrichtung;

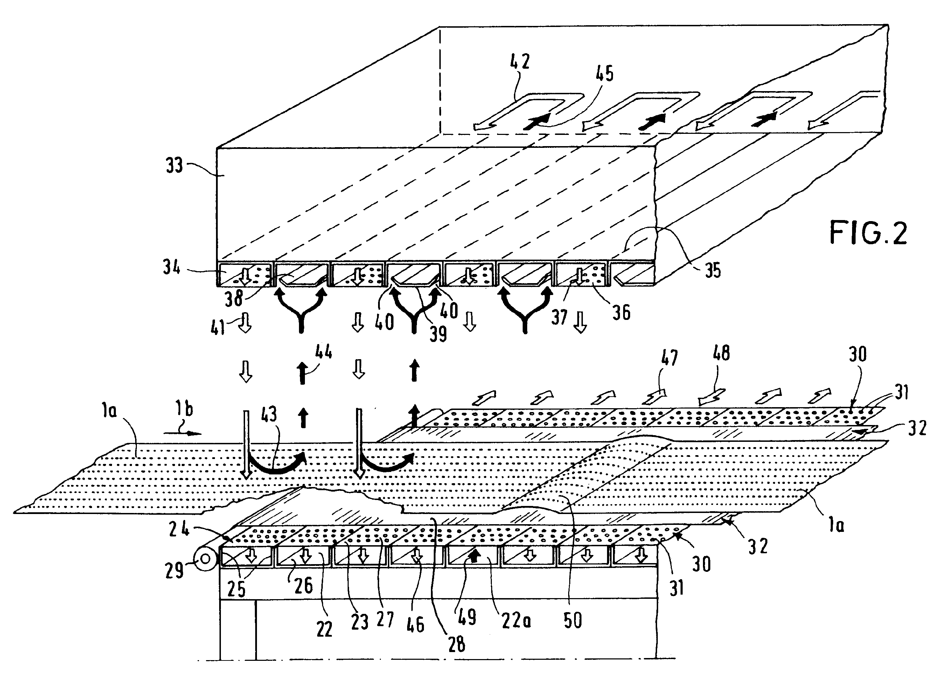

- Fig. 2: perspektivisch einen Einblick in einen Teil eines Trockners der erfindungsgemäßen Vorrichtung.

Eine erfindungsgemäße Vorrichtung zur Herstellung insbesondere der in der EP-A- 0 238 014 beschriebenen thermoplastischen Folien mit rasterartig auf die Folien nach dem Pastenpunktdruckverfahren aufgedruckten, aus einer wässrigen Dispersion gesinterten bzw. ausgelierten Klebstoffpunkten weist eine übliche Abwicklungseinrichtung 1 auf, von der die Folienbahn 1a von der Folienrolle in Pfeilrichtung 1b abgezogen wird.

Nach der Erfindung wird die Folienbahn 1a im Anschluß an die Abwicklungseinrichtung 1 noch vor dem Aufdrucken der Pastenpunkte mit einer an sich bekannten Breitstreckwalze 2, vorzugsweise einer bogenverstellbaren Breitstreckwalze, einem sogenannten Schnurbreithalter, faltenfrei nach beiden Seiten gestreckt, so daß ein faltenfreies Breitstrecken der Folienbahn 1a auf der ganzen Folienbreite bewirkt wird und die gestreckte Folie unter entsprechender Spannung weiter transportiert wird. Erfindungsgemäß wird vorzugsweise gleichzeitig durch eine Transportzugspannung mittels der Breitstreckwalze 2 nachgeordneter unterer Preßwalze 4 und oberer Preßwalze 3 ein faltenfreies Recken der Folie auch in Längsrichtung bewirkt. Das derartige Recken von Kunststoff-folien ist bekannt und braucht nicht näher erläutert zu werden.

Die erfindungsgemäße Vorrichtung weist unmittelbar hinter den Transportwalzen 3, 4 die Pastenpunktdruckeinrichtung mit der Gummidruckwalze 5 und der Schablonenwalze 6 auf, wobei die untere Preßwalze 4 so angeordnet ist, daß sie die Folienbahn 1a gegen die Gummidruckwalze 5 linienförmig preßt, während die obere Preßwalze 3 so angeordnet ist, daß sie die Folienbahn gegen die Schablone 6 spannt, so daß ein ausreichender Umschlingungswinkel für die Folienbahn 1a gewährleistet wird, die - wie abgebildet - zwischen der Gummidruckwalze 5 und der Schablonenwalze 6 im Kontakt mit beiden Walzen für das Bedrucken durchgezogen wird. Dabei werden die Klebstoffdispersionspastenpunkte aufgebracht.

Erfindungsgmäß werden die Pastenpunkte in einer Menge und Verteilung aufgebracht, die ausreicht, die gereckte Form der Folienbahn zu erhalten bis zum Einlaufen in den nachgeschalteten Trockner 8, in dem das Wasser der Pastenpunkte ausgetrieben und vorzugsweise auch der Kunststoff der Pastenpunkte ausgeliert bzw. gesintert wird.

Für die Zwecke der Erfindung weist der Trockner 8 einen besonderen Aufbau auf. Er besteht aus einem Maschinengestell 21, auf dem in Querrichtung zur Transportrichtung 1b der Folienbahn 1a dicht nebeneinander Luftabsaugkanäle 22 angeordnet sind, deren Deckenwandungen 23 eine ebene horizontale Laufbahn 24 bilden. Die Kanäle 22 sind zweckmäßigerweise im Querschnitt quaderförmig ausgebildet und weisen außer der Deckenwandung 23 die Seitenwandungen 25 und die Bodenwandung 26 auf. Stirnseitig sind die Kanäle 22 an nicht dargestellte Luftzufuhr- oder Luftauslaßöffnungen angeschlossen. In die Deckenwandungen 23 sind Löcher 27 vorzugsweise in Form von Lochreihen eingebracht.

Auf der Laufbahn 24 liegt ein endlos geführtes, angetriebenes, luftdurchlässiges Transportband 28 auf, das z. B. aus einem teflonisiertem Glasfasergewebe bestehen kann. Das Transportband 28 wird in an sich bekannter Weise über Umlenkwalzen 29 vor und hinter dem Trockner 8 zu nicht dargestellten Antriebsmitteln nach unten in das Maschinengestell 21 geführt. Es wird mit gleicher Geschwindigkeit und in die gleiche Richtung angetrieben wie die Folienbahn 1a.

Wesentlich ist, daß die Laufbahn 24 breiter ist als das Transportband 28, so daß ein seitlicher Überstand 30 beiderseits des Transportbandes 28 verbleibt mit mindestens einer freibleibenden Lochreihe 31 in Längsrichtung der Laufbahn 24. Zudem ist vorzugsweise das Transportband 28 breiter als die punktbeschichtete Folienbahn 1a, so daß das Transportband 28 seinerseits einen seitlichen Überstand 32 beiderseits der Folienbahn 1a aufweist.

Mit diesen Einrichtungen des Maschinengestells 21 wirken die im folgenden beschriebenen Einrichtungen des über dem Maschinengestell 21 angeordneten Maschinenoberteils 33 zusammen.

Das Maschinenoberteil 33 weist an seiner Unterseite 35 auf Abstand und quer zur Transportrichtung 1b der Folienbahn 1a angeordnete Zuluftkanäle 34 auf. Der Abstand beträgt vorzugsweise eine Zuluftkanalbreite. Die Zuluftkanäle 34 sind zweckmäßigerweise genauso ausgebildet wie die Luftabsaugkanäle 22 und weisen die gleichen Abmessungen auf; sie sind jedoch mit der Lochreihenwandung 36 mit den Löchern 37 zur Folienbahn 1a hin gerichtet angeordnet. Im Zwischenraum zwischen den Zuluftkanälen 34 befinden sich Umluftkanäle 38, die etwa die gleichen Abmessungen aufweisen wie die Zuluftkanäle 34. In ihre der Förderbahn 24 zugewandte Wandung 39 sind jedoch quer zur Transportrichtung 1b verlaufende Absaugschlitze 40 eingebracht. Demgemäß sind die Kanäle 24 und 38 im Wechsel angeordnet.

Den Zuluftkanälen 34 wird in Pfeilrichtung 42 warme Luft zugeführt, die in Pfeilrichtung 41 aus den Löchern 36 der Zuluftkanäle 34 austritt, auf die Folienbahn gelenkt und von dort in Bogenpfeilrichtung 43 und in Aufwärtspfeilrichtung 44 - z. B. mit Trocknungswasser beladen - in die Umluftkanäle 38 gesaugt wird, aus denen sie in Pfeilrichtung 45 in z. B. einen Lufterhitzer (nicht dargestellt) abgesaugt wird. Es entsteht somit jeweils durch das Zusammenwirken eines Kanals 34 mit einem Kanal 38 eine Luftwalze über der Folienbahn 1a, die ein besonders sanftes Überstreichen der Folienbahn und damit ein folienschonendes Trocknen der Paste der Pastenpunkte auf der Folienbahn bewirkt, ohne daß die Folie aufgrund der Wärmeeinwirkung ihre Raumform verändert. Aufgrund der Vielzahl zusammenwirkender Kanalsysteme 34, 38 können Luftströme unterschiedlicher Temperatur und mit unterschiedlichen Luftmengen auf die Folienoberfläche geleitet werden, was eine einfache Anpassung an die Folienart und die Pastenzusammensetzung bzw. -menge ermöglicht.
Die Folienbahn 1a wird von den Luftwalzen auf das Transportband 28 gedrückt. Zudem wird aufgrund der freiliegenden Lochreihen 31 und des luftdurchlässigen Transportbandes 28 sowie aufgrund eines an die Kanäle 22 angelegten Unterdrucks, der von Kanal zu Kanal unterschiedlich sein kann, eine Teilmenge der Zuluft aus den Kanälen 34 in Pfeilrichtung 46 über die Löcher 27 in die Kanäle 22 gesaugt und aus den Kanälen 22 in Pfeilrichtung 47 abgesaugt. Durch diese Maßnahmen erreicht man ein sattes Anliegen und damit die Formerhaltung der Folienbahn 1a während des Trocknens auf dem Transportband 28 und vor allem das Abführen der aus der Paste der Pastenpunkte stammenden Feuchtigkeit, die damit keine schädliche Wirkung auf die Folie ausüben kann.

Nach einer besonderen Ausführungsform der Erfindung wird nach dem Austreiben des Wassers im Trockner 8 der Kunststoff der Pastenpunkte gesintert bzw. ausgeliert. Zu diesem Zweck ist mindestens einer der Kanäle 22 ein Gegenluftkanal 22a, der an eine Luftzufuhreinrichtung (nicht dargestellt) angeschlossen ist, die in Pfeilrichtung 48 stirnseitig Gegenluft zuführt, die in Pfeilrichtung 49 aus den Löchern 27 des Gegenluftkanals 22a nach oben entweichen kann. Mit diesem Mittel gelingt es, die Folienbahn 1a von unten derart anzublasen, daß sie sich im Bereich über dem Kanal 22a mit einem Bogen 50 nach oben wölbt, weil sie vor und hinter dem Kanal 22a durch die Zuluft von oben (Pfeilrichtung 41) und den Unterdruck der Absaugung in Pfeilrichtung 46 auf die Transportbahn 24 gedrückt wird.

Der Zweck der Bildung des Bogens bzw. der Wölbung 50 ist, die Pastenpunkte mit einer von oben wirkenden Luftwalze (Pfeilrichtung 41, 43, 44) beaufschlagen zu können, die Luft erhöhter Temperatur im Vergleich zur Temperatur benachbarter Luftwalzen aufweist, die für das Folienmaterial der Folienbahn 1a schädlich wäre, zum Ausgelieren bzw. Sintern des Kunststoffs der Pastenpunkte aber erforderlich ist. Damit die hohe Temperatur der Luftwalze über dem Kanal 22a die Folie nicht schädigt, wird die Folienbahn 1a von unten in Pfeilrichtung 49 mit kühlerer Luft angeblasen, so daß sich die Folienbahn 1a wölbt und abgehoben vom Transportband 28 bzw. freischwebend von unten gekühlt wird. Somit gelingt es, trotz für die Folie unverträglicher Gelier- bzw.

Sintertemperatur die Folie derart kühl zu halten, daß die hohe Gelier- bzw. Sintertemperatur keinen schädlichen Einfluß auf das Folienmaterial ausübt.

Da die Luftzufuhrmengen, die Luftabsaugmengen, die Gegenluftmengen, die Temperatur der Luftströme sowie die Durchlaufgeschwindigkeiten der Folienbahn 1a mit einfachen Mitteln regulierbar sind, kann die erfindungsgemäße Anlage auf die jeweiligen zu behandelnden Materialien der Folie der Folienbahn 1a und/oder der Bestandteile der Pastendispersion der Klebstoffpunkte eingestellt und gefahren werden. Falls erforderlich, können mehrere Gegenluftkanäle 22a nebeneinander und/oder im Wechsel mit Luftabsaugkanälen 22 vorgesehen sein.

In Transportrichtung 1b hinter dem Trockner 8 befindet sich eine Kühlwalze 13, über die die Folienbahn 1a geführt wird und die von innen mit Wasser einer Temperatur von z. B. 8 bis 14°C gekühlt wird, so daß der Mantel der Kühlwalze 13 die Folie 1a vorzugsweise auf 14 bis 20°C abkühlt. Zweckmäßigerweise ist die Mantelfläche des aus Metall bestehenden Mantels der Kühlwalze 13 mit einer textilen Stoffbahn bzw. einem textilen Tuch belegt, die vorzugsweise einen nach außen abstehenden Flor aufweisen. Dieser textile Stoff verhindert eine schädliche schockartige Abkühlung der Folienbahn 1a. Besonders vorteilhaft ist die Verwendung eines Samts oder eines samtähnlichen Stoffes als Textilstoffbahn für die Oberfläche der Kühlwalze 13. Die textile Stoffbahn sorgt außerdem auch für eine gute Haftung der Folienbahn 1a auf der Walzenoberfläche und damit für eine gute Mitnahme der Folienbahn.

Unter der Kühlwalze 13 befindet sich eine kleine Umlenkwalze 12, der in Transportrichtung eine weitere Umlenkwalze 16 folgt, der erfindungsgemäß eine weitere Breitstreckwalze 19, die vorzugsweise ein Schnurbreithalter ist, nachgeordnet ist. Der Schnurbreithalter reckt die Folienbahn in an sich bekannter Weise für das Aufwickeln, das in der nachgeschalteten Aufwickeleinrichtung 7 mit den Steigdockenwalzen 19, 20 erfolgt.

Für Folienmaterial und/oder Dispersionspastenmaterial, das im Trockner 8 nicht ausreichend behandelt werden kann, ist erfindungsgemäß eine Gelier- bzw. Sinterstation 9 der Kühlwalze 13 nachgeordnet, mit einer Umlenkwalze 14 im Anschluß an die Kühlwalze 13 und einer über der Umlenkwalze 14 im Abstand angeordneten Breitstreckwalze 15, die vorzugsweise ein Schnurbreithalter ist. Über dem Schnurbreithalter 15 ist eine von innen mit Wasser, vorzugsweise einer Temperatur von 8 bis 14°C gekühlte Lagerwalze 9a angeordnet, die einen Metallmantel aufweist, über dem die Folienbahn 1c in Pfeilrichtung 1d mit einem Umschlingungswinkel von zweckmäßigerweise etwa 270° geführt wird. Über einem Umfangsteilbereich der Oberfläche erstreckt sich im Abstand davon ein Sinterstrahler 10 z. B. ein IR-Strahler, der Wärme in Richtung Mantelfläche der Lagerwalze 9a abstrahlt. Zwischen der Lagerwalze 9a und der Umlenkwalze 16 ist eine sogenannte Bananenwalze 17 angeordnet, über die die Folienbahn 1c von der Lagerwalze 9a zur Umlenkwalze 16 geleitet wird. Die Bananenwalze 17 hat eine gebogene Raumform und wirkt demgemäß als Breitenstrecker etwa wie ein Schnurbreithalter. Von der Umlenkwalze 16 gelangt die Folienbahn 1c in gleicher Weise wie die Folienbahn 1a zur Aufwickeleinrichtung 7 mit den Bestandteilen 17, 18 und 20.

In der Sinterstation wird das Folienmaterial der Folienbahn 1c von der Unterseite gekühlt, während von der Oberseite Wärme auf die Pastenpunkte gestrahlt wird, wobei es zum Sintern bzw. Ausgelieren des Kunststoffs der getrockneten Pastenpunkte kommt. Die normalerweise schädlich auf das thermoplastische Material der Kunststoffolie 1c wirkende Sinter- bzw. Geliertemperatur wird durch die Kühlung der Folie während des Sinterns bzw. Gelierens von der Folie abgehalten, wie dies im Trockner 8 in ähnlicher Weise durch den Kanal 22a bewirkt wird.

Aufgrund der Abkühlung auf der Kühlwalze 13 ergeben sich Schrumpf-Spannungen in der Folienbahn. Deshalb wird die Folie vor dem Aufwickeln durch die Breitsteckwalze 19 bzw. vor dem Ausgelieren durch die Breitstreckwalze 15 und dann vor dem Aufwickeln durch die Bananenwalze 17 und die Breitstreckwalze 19 gereckt, so daß ein faltenfreies Endprodukt aufgewickelt zur Verfügung steht.

Nach einer besonderen Ausführungsform der Erfindung ist die Oberfläche der Gegenwalze bzw. Gummiwalze 5 mit einem relativ weichen Gummi- bzw. Kunststoffmaterial ausgerüstet. Mit einer nicht dargestellten Sprühanlage wird ein dünner Wasserfilm auf die Oberfläche der Gummidruckwalze 5 aufgesprüht, so daß die Folienbahn 1a auf den Wasserfilm trifft bzw. so daß zwischen der Oberfläche der Gummidruckwalze 5 und der Unterseite der Folienbahn 1a ein Wasserfilm angeordnet ist. Diese Maßnahme unterstützt in überraschender Weise einen fehlerfreien Aufdruck der Pastenpunkte und führt zu einer guten Haftung der Pastenpunkte auf der Oberfläche der Folienbahn 1a. Es gelingt mit dieser Maßnahme die Pastenmenge homogen verteilt auf die Oberfläche der Folienbahn aufzubringen, so daß ein gleichmäßiger Pastenauftrag gewährleistet werden kann.

## Patentansprüche

1. Verfahren zur Herstellung von thermoplastischen Kunststofffolien mit rasterförmig aufgedruckten Klebstoffpunkten, wobei auf die Folien rasterförmig Schmelzkleberpunkte aus einem Thermoplast und/oder Duroplast nach dem Pastenpunktdruckverfahren aufgedruckt werden in Form einer wässrigen Dispersionspaste, nach dem Aufdrucken durch Einwirkung von Wärme die Pastendispersion der Klebstoffpunkte getrocknet und anschließend der Kunststoffbestandteil der Klebstoffpunkte durch Einwirkung erhöhter Temperatur gesintert oder ausgeliert wird, wonach die Folie abgekühlt wird, so daß eine Folie mit verfestigten auf der Folie haftenden durch Wärme aktivierbaren Klebstoffpunkten vorliegt,
**dadurch gekennzeichnet**,
daß während der Einwirkung der erhöhten Temperatur auf die Klebstoffpunkte zum Sintern bzw. Ausgelieren des Kunststoffbestandteiles die Folie gekühlt wird.

2. Verfahren nach Anspruch 1,
**dadurch gekennzeichnet**,
daß mit Luft gegen die Unterseite der Folie, auf der sich keine Klebstoffpunkte befinden, geblasen wird.

3. Verfahren nach Anspruch 2,
**dadurch gekennzeichnet**,
daß die Folie durch das Anblasen mit Luft freischwebend gehalten wird.

4. Verfahren nach Anspruch 1,
**dadurch gekennzeichnet**,
daß die Folie während der Einwirkung der erhöhten Temperatur auf einer mantelgekühlten Walze lagert.

5. Verfahren nach einem oder mehreren der Ansprüche 1 bis 4,
**dadurch gekennzeichnet**,
daß die Folie vor dem Bedrucken gereckt wird, so daß die Folie vor dem Bedrucken in definierter Warenspannung gehalten wird.

6. Verfahren nach Anspruch 5,
**dadurch gekennzeichnet**,
daß die Folie breitengestreckt wird.

7. Verfahren nach Anspruch 5 und/oder 6,
**dadurch gekennzeichnet**,
daß die Folie in Längsrichtung gestreckt wird.

8. Verfahren nach einem oder mehreren der Ansprüche 1 bis 7,
**dadurch gekennzeichnet**,
daß die Folie während des Trocknens der Dispersionspastenpunkte mittels Luft und/oder Unterdruck auf ein luftdurchlässiges Transportband gedrückt wird.

9. Verfahren nach Anspruch 8,
**dadurch gekennzeichnet**,
daß die Trocknung mittels mehrerer, hintereinander angeordneter Luftwalzen ausgeführt wird.

10. Verfahren nach einem oder mehreren der Ansprüche 1 bis 9,
**dadurch gekennzeichnet**,
daß die Folie nach dem Trocknen vor dem Sintern bzw. Ausgelieren der getrockneten Dispersionspastenpunkte breitengestreckt wird.

11. Verfahren nach einem oder mehreren der Ansprüche 1 bis 9,
**dadurch gekennzeichnet**,
daß die Folie nach dem Sintern bzw. Ausgelieren der Dispersionspastenpunkte breitengestreckt wird.

12. Verfahren nach einem oder mehreren der Ansprüche 1 bis 11,
**dadurch gekennzeichnet**,
daß die Folie während des Bedruckens auf einem Wasserfilm lagert.

13. Verfahren nach einem oder mehreren der Ansprüche 1 bis 12,
**dadurch gekennzeichnet**,
daß das Ausgelieren bzw. Sintern mit Luft entsprechender Temperatur ausgeführt wird.

14. Verfahren nach einem oder mehreren der Ansprüche 1 bis 12,
**dadurch gekennzeichnet**,
daß das Sintern bzw. Ausgelieren mit IR-Strahlung ausgeführt wird.

15. Verfahren nach einem oder mehreren der Ansprüche 1 bis 14,
**dadurch gekennzeichnet**,
daß die Folie während des Sinterns bzw. Ausgelierens auf 14 bis 20°C abgekühlt wird.

16. Vorrichtung zur Durchführung des Verfahrens nach einem oder mehreren der Ansprüche 1 bis 15, mit einer Abwicklungseinrichtung (1) sowie einer in Folientransportrichtung (1b) nachgeordneter, zumindest Transportwalzen (3, 4) sowie eine Gummidruckwalze (5) und eine Schablonenwalze (6) aufweisender Dispersionspastenpunktdruckeinrichtung, einem Trockner (8), einer Sinter- bzw. Ausgeliereinrichtung und einer Aufwickeleinrichtung (7),
dadurch **gekennzeichnet**,
daß der Trochner (8) eine ebene horizontale Laufbahn (24) aufweist, die gebildet wird durch gelochte Deckenwandungen (23) hintereinander angeordneter, sich quer zur Transportrichtung (1b) erstreckender Luftabsaugkanäle (22), an die stirnseitig Luftsaugeinrichtungen angesetzt sind.

17. Vorrichtung nach Anspruch 16,
dadurch **gekennzeichnet**,
daß die Folienbahn (1a) freischwebend zwischen den beiden Stationen (33-14; 22a) hindurchgeführt ist.

18. Vorrichtung nach Anspruch 16 oder 17,
dadurch **gekennzeichnet**,
daß der Trockner (8) eine Sinter- bzw. Ausgelierstation (33-14) aufweist, die über einer Kühlstation (22a) angeordnet ist, wobei zwischen diesen beiden Stationen die Folienbahn (1a) hindurchgeführt wird.

19. Vorrichtung nach Anspruch 18,
**dadurch gekennzeichnet**,
daß im Verband der Luftabsaugkanäle (22) wenigstens ein Gegenluftkanal (22a) angeordnet ist, der mit seiner gelochten Deckenwandung (23) in der Laufbahn (24) liegt und zur Bildung der Kühlstation stirnseitig an eine Kühlluftzufuhreinrichtung angeschlossen ist.

20. Vorrichtung nach Anspruch 18 oder 19,
**dadurch gekennzeichnet,**
daß in die Deckenwandungen (23) Löcher (27) in Form von Lochreihen eingebracht sind.

21. Vorrichtung nach einem oder mehreren der Ansprüche 18 bis 20,
**dadurch gekennzeichnet,**
daß auf der Laufbahn (24) ein endlos geführtes, angetriebenes, luftdurchlässiges Transportband (28) aufliegt.

22. Vorrichtung nach Anspruch 21,
**dadurch gekennzeichnet,**
daß das Transportband (28) aus einem teflonisierten Glasfasergewebe besteht.

23. Vorrichtung nach Anspruch 21 oder 22,
**dadurch gekennzeichnet,**
daß die Laufbahn (24) breiter ist als das Transportband (28), so daß ein seitlicher Überstand (30) beiderseits des Transportbandes (28) verbleibt mit mindestens jeweils einer freibleibenden Lochreihe (31) in Längsrichtung der Laufbahn (24).

24. Vorrichtung nach Anspruch 23,
**dadurch gekennzeichnet,**
daß das Transportband (28) breiter als die punktbeschichtete Folienbahn (1a) ist, so daß das Transportband (28) seinerseits einen seitlichen Überstand (32) beiderseits der Folienbahn (1a) aufweist.

25. Vorrichtung nach einem oder mehreren der Ansprüche 18 bis 24,
**dadurch gekennzeichnet,**
daß oberhalb der Laufbahn (24) auf Abstand voneinander und quer zur Transportrichtung (1b) sich erstreckende Zuluftkanäle (34) angeordnet sind.

26. Vorrichtung nach Anspruch 25,
**dadurch gekennzeichnet,**
daß die Zuluftkanäle (34) genauso ausgebildet sind wie die Luftabsaugkanäle (22) und mit der Lochreihenwandung (36) mit den Löchern (37) zur Laufbahn (24) senkrecht gerichtet angeordnet sind.

27. Vorrichtung nach Anspruch 25 oder 26,
**dadurch gekennzeichnet,**
daß im Zwischenraum zwischen den Zuluftkanälen (34) Umluftkanäle (38) angeordnet sind, die etwa die gleichen Abmessungen aufweisen wie die Zuluftkanäle und die in ihrer zur Laufbahn (24) zugewandten Wandung (39) sich quer zur Transportrichtung (1b) erstreckende Absaugschlitze (40) aufweisen, wobei die Zuluftkanäle (34) stirnseitig an Luftzufuhreinrichtungen und die Umluftkanäle (38) stirnseitig an Luftabsaugeinrichtungen angeschlossen sind.

28. Vorrichtung nach einem oder mehreren der Ansprüche 16 bis 27,
**gekennzeichnet durch**
eine Breitenstreckvorrichtung (2) zwischen der Abwicklungseinrichtung (1) und der Druckeinrichtung.

29. Vorrichtung nach einem oder mehreren der Ansprüche 16 bis 28,
**gekennzeichnet durch**
eine Sprühvorrichtung zum Aufsprühen von Wasser auf die Oberfläche der Gummidruckwalze (5).

30. Vorrichtung nach einem oder mehreren der Ansprüche 16 bis 29,
**gekennzeichnet durch**
eine dem Trockner (8) nachgeordnete Sinter- bzw. Ausgelierstation (9).

31. Vorrichtung nach einem oder mehreren der Ansprüche 16 bis 30,
**dadurch gekennzeichnet,**
daß hinter dem Trockner (8) eine Kühlwalze (13) angeordnet ist.

32. Vorrichtung nach einem oder mehreren der Ansprüche 16 bis 31,
**dadurch gekennzeichnet,**
daß vor der Sinter- bzw. Ausgelierstation (9) eine Breitenstreckeinrichtung (15) angeordnet ist.

33. Vorrichtung nach einem oder mehreren der Ansprüche 16 bis 31,
**dadurch gekennzeichnet,**
daß der Sinter- bzw. Ausgelierstation (9) eine Breitenstreckeinrichtung (17) nachgeordnet ist.

34. Vorrichtung nach einem oder mehreren der Ansprüche 16 bis 32,
**dadurch gekennzeichnet,**
daß vor der Aufwickelstation (7) eine Breitenstreckeinrichtung (19) angeordnet ist.

35. Vorrichtung nach einem oder mehreren der Ansprüche 16 bis 34,
**dadurch gekennzeichnet,**
daß die Breitenstreckeinrichtung (2, 15 und 19) Schnurbreithalter sind.

36. Vorrichtung nach einem oder mehreren der Ansprüche 16 bis 35,
**dadurch gekennzeichnet,**
daß die Breitenstreckeinrichtung (17) eine Bananenwalze ist.

37. Vorrichtung nach einem oder mehreren der Ansprüche 16 bis 36,
**dadurch gekennzeichnet,**
daß die Sinter- bzw. Ausgelierstation (9) eine mantelgekühlte Kühlwalze (9a) aufweist, über der ein IR-Strahler (10) angeordnet ist.

38. Vorrichtung nach Anspruch 37,
**dadurch gekennzeichnet,**
daß die Sinter- bzw. Ausgelierstation (9) zwischen der Kühlwalze (13) und der Aufwickeleinrichtung (7) angeordnet ist.

39. Vorrichtung nach einem oder mehreren der Ansprüche 16 bis 38,
**dadurch gekennzeichnet,**
daß die Kühlwalze (13) eine mantelgekühlte Kühlwalze ist, auf deren Oberfläche eine einen Flor aufweisende textile Stoffbahn, vorzugsweise ein Samt angeordnet ist.

40. Vorrichtung nach einem oder mehreren der Ansprüche 16 bis 39,
**dadurch gekennzeichnet,**
daß der Mantel der Kühlwalze (9a) aus Metall besteht.

## Claims

1. Process for producing thermoplastic synthetic films having adhesive dots printed on in the manner of a grid, hot-melt adhesive dots of a thermoplastic and/or thermoset material being printed in the form of an aqueous dispersion paste onto the films in the manner of a grid by the paste dot printing process, the paste dispersion of the adhesive dots being dried after printing on by the action of heat and then the synthetic component of the adhesive dots being sintered or gelled by the action of high temperature, after which the film is cooled so that a film having solidified adhesive dots which adhere to the film and can be actuated by heat is produced, characterized in that during the action of high temperature on the adhesive dots for sintering or gelling the synthetic component the film is cooled.

2. Process according to Claim 1, characterized in that air is blown against the underside of the film, on which there are no adhesive dots.

3. Process according to Claim 2, characterized in that the film is held in a manner floating freely as a result of air being blown against it.

4. Process according to Claim 1, characterized in that the film is borne on a casing-cooled roller during the action of high temperature.

5. Process according to one or more of Claims 1 to 4, characterized in that the film is stretched before printing, so that the film is held at a defined material tension before printing.

6. Process according to Claim 5, characterized in that the film is stretched widthwise.

7. Process according to Claim 5 and/or 6, characterized in that the film is stretched in the longitudinal direction.

8. Process according to one or more of Claims 1 to 7, characterized in that during drying of the dispersion paste dots the film is pressed against an air-permeable conveyor belt by means of air and/or underpressure.

9. Process according to Claim 8, characterized in that the drying is performed by means of a plurality of air rollers arranged one behind the other.

10. Process according to one or more of Claims 1 to 9, characterized in that the film is stretched widthwise after drying and before sintering or gelling the dried dispersion paste dots.

11. Process according to one or more of Claims 1 to 9, characterized in that the film is stretched widthwise after sintering or gelling the dispersion paste dots.

12. Process according to one or more of Claims 1 to 11, characterized in that the film is borne on a film of water during printing.

13. Process according to one or more of Claims 1 to 12, characterized in that gelling or sintering is carried out using air at an appropriate temperature.

14. Process according to one or more of Claims 1 to 12, characterized in that sintering or gelling is carried out using IR radiation.

15. Process according to one or more of Claims 1 to 14, characterized in that the film is cooled to 14 to 20°C during sintering or gelling.

16. Apparatus for carrying out the process according to one or more of Claims 1 to 15, having an unwinding means (1); and a dispersion paste dot printing means which is arranged downstream in the direction of film transport (lb) and has at least transport rollers (3, 4) and a rubber printing roller (5) and a screen printing roller (6); a drier (8); a sintering or gelling means; and a winding-on means (7), characterized in that the drier (8) has a planar horizontal running track (24) which is formed by perforated top walls (23) of air suction-removal channels (22) which are arranged one behind the other and extend transversely with respect to the direction of transport (lb) and to which end-side air suction means are attached.

17. Apparatus according to Claim 16, characterized in that the foil web (1a) is guided through in a manner floating freely between the two stations (33-14; 22a).

18. Apparatus according to Claim 16 or 17, characterized in that the drier (8) has a sintering or gelling station (33-14) which is arranged above a cooling station (22a), the film web (1a) being guided through between these two stations.

19. Apparatus according to Claim 18, characterized in that at least one contraflow air channel (22a) is arranged in the group of air suction-removal channels (22) and lies with its perforated top wall (23) in the running track (24) and, for formation of the cooling station, is attached at the end side to a cool-air supply means.

20. Apparatus according to Claim 18 or 19, characterized in that perforations (27) in the form of rows of perforations are made in the top walls (23).

21. Apparatus according to one or more of Claims 18 to 20, characterized in that an endlessly guided driven air-permeable conveyor belt (28) lies on the running track (24).

22. Apparatus according to Claim 21, characterized in that the conveyor belt (28) comprises a Teflon-coated glass fibre cloth.

23. Apparatus according to Claim 21 or 22, characterized in that the running track (24) is wider than the conveyor belt (28), so that a lateral overhang (30) remains on either side of the conveyor belt (28), with at least one respective row of perforations (31) remaining free in the longitudinal direction of the running track (24).

24. Apparatus according to Claim 23, characterized in that the conveyor belt (28) is wider than the dot-coated film web (1a), so that the conveyor belt (28) for its part has a lateral overhang (32) on either side of the film web (1a).

25. Apparatus according to one or more of Claims 18 to 24, characterized in that supply air channels (34) extending above the running track (24) spaced from one another and transversely with respect to the direction of transport (1b) are provided.

26. Apparatus according to Claim 25, characterized in that the supply air channels (34) are constructed exactly like the air suction-removal channels (22) and, with the perforation row wall (36) having the perforations (37), are arranged directed perpendicular to the running track (24).

27. Apparatus according to Claim 25 or 26, characterized in that there are arranged in the intermediate space between the supply air channels (34) air deflection channels (38) which have approximately the same dimensions as the supply air channels and which have in their wall (39) facing the running track (24) suction-removal slots (40) extending transversely to the direction of transport (1b), the supply air channels (34) being attached at the end side to air supply means and the air deflection channels (38) being attached at the end side to air suction-removal means.

28. Apparatus according to one or more of Claims 16 to 27, characterized by a widthwise stretching apparatus (2) between the unwinding means (1) and the printing means.

29. Apparatus according to one or more of Claims 16 to 28, characterized by a spray apparatus for spraying water onto the surface of the rubber printing roller (5).

30. Apparatus according to one or more of Claims 16 to 29, characterized by a sintering or gelling station (9) downstream of the drier (8).

31. Apparatus according to one or more of Claims 16 to 30, characterized in that a cooling roller (13) is arranged behind the drier (8).

32. Apparatus according to one or more of Claims 16 to 31, characterized in that a widthwise stretching means (15) is arranged in front of the sintering or gelling station (9).

33. Apparatus according to one or more of Claims 16 to 31, characterized in that a widthwise stretching means (17) is arranged downstream of the sintering or gelling station (9).

34. Apparatus according to one or more of Claims 16 to 32, characterized in that a widthwise stretching means (19) is arranged in front of the winding-on station (7).

35. Apparatus according to one or more of Claims 16 to 34, characterized in that the widthwise stretching means (2, 15 and 19) are cord stretchers.

36. Apparatus according to one or more of Claims 16 to 35, characterized in that the widthwise stretching means (17) is a banana roller.

37. Apparatus according to one or more of Claims 16 to 36, characterized in that the sintering or gelling station (9) has a casing-cooled cooling roller (9a) above which an IR radiation means (10) is arranged.

38. Apparatus according to Claim 37, characterized in that the sintering or gelling station (9) is arranged between the cooling roller (13) and the winding-on means (7).

39. Apparatus according to one or more of Claims 16 to 38, characterized in that the cooling roller (13) is a casing-cooled cooling roller on the surface of which there is arranged a textile material web having a nap, preferably a velvet.

40. Apparatus according to one or more of Claims 16 to 39, characterized in that the casing of the cooling roller (9a) is of metal.

## Revendications

1. Procédé pour la réalisation de films thermoplastiques en matière synthétique sur lesquels est appliquée une grille de points de colle, une grille de points de colle à fusion en un thermoplast et/ou en duroplast étant appliquée sur les films selon le procédé d'impression de points de pâte sous la forme d'une pâte à dispersion aqueuse, la dispersion de la pâte des points de colle étant séchée après son application, sous l'action de la chaleur et la composante en matière synthétique des points de colle étant ensuite agglomérée par gélification ou frittée sous l'action d'une température plus élevée, le film étant ensuite refroidi de manière à obtenir un film muni de points de colle durcis, adhérant au film et pouvant être activés par la chaleur,
caractérisé par le fait que le film est refroidi au cours de l'action de la température élevée sur les points de colle en vue de fritter ou d'agglomérer par gélification la composante en matière synthétique.

2. Procédé selon la revendication 1,
caractérisé par le fait que de l'air est soufflé contre la face inférieure du film sur laquelle il n'y a pas de points de colle.

3. Procédé selon la revendication 2,
caractérisé par le fait que le film est maintenu en suspension grâce au soufflage d'air.

4. Procédé selon la revendication 1,
caractérisé par le fait qu'au cours de l'action de la température plus élevée, le film repose sur un cylindre dont l'enveloppe est refroidie.

5. Procédé selon l'une ou plusieurs des revendications 1 à 4,
caractérisé par le fait qu'avant l'impression, le film est étiré, de manière à ce que le film soit maintenu à une tension prédéterminée;

6. Procédé selon la revendication 5,
caractérisé par le fait que le film est étiré dans sa largeur.

7. Procédé selon la revendication 5 et/ou 6,
caractérisé par le fait que le film est étiré dans sa longueur.

8. Procédé selon l'une ou plusieurs des revendications 1 à 7,
caractérisé par le fait qu'au cours du séchage des points de pâte à dispersion, le film est pressé, par de l'air et/ou une dépression, sur une courroie de transport perméable à l'air.

9. Procédé selon la revendication 8,
caractérisé par le fait que le séchage est effectué au moyen de plusieurs cylindres à air alignés successivement.

10. Procédé selon l'une ou plusieurs des revendications 1 à 9,
caractérisé par le fait que le film est étiré en largeur après séchage, avant le frittage, respectivement l'agglomération par gélification des points de pâte à dispersion séchés.

11. Procédé selon l'une ou plusieurs des revendications 1 à 9,
caractérisé par le fait que le film est étiré en largeur après le frittage, respectivement l'agglomération par gélification des points de pâte à dispersion.

12. Procédé selon l'une ou plusieurs des revendications 1 à 11,
caractérisé par le fait qu'au cours de l'impression, le film repose sur un film d'eau.

13. Procédé selon l'une ou plusieurs des revendications 1 à 12,
caractérisé par le fait que l'agglomération par gélification, respectivement le frittage est effectué avec de l'air à température appropriée.

14. Procédé selon l'une ou plusieurs des revendications 1 à 12,
caractérisé par le fait que le frittage, respectivement l'agglomération par gélification est effectué par rayonnement infrarouge.

15. Procédé selon l'une ou plusieurs des revendications 1 à 14,
caractérisé par le fait qu'au cours du frittage, respectivement de l'agglomération par gélification, le film est refroidi à une température située entre 14 et 20°C.

16. Dispositif pour la mise en oeuvre du procédé selon l'une ou plusieurs des revendications 1 à 15, comportant un dispositif de déroulement (1), ainsi qu'un dispositif d'impression de points de pâte à dispersion, disposé en aval dans le sens de transport (1b) du film et comportant au moins des cylindres de transporet (3, 4), ainsi qu'un cylindre d'impression en caoutchouc (5) et un cylindre-pochoir (6), un séchoir (8), un dispositif de frittage, respectivement d'agglomération par gélification et un dispositif d'enroulement (7),
caractérisé par le fait que le séchoir (8) comporte une piste plane horizontale (24) constituée par des parois supérieures perforées (23) de canaux d'évacuation de l'air par aspiration (22) disposés les uns après les autres, transversalement à la direction de transport (1b) sur la face antérieure desquels sont raccordés des dispositifs d'aspiration d'air.

17. Dispositif selon la revendication 16,
caractérisé par le fait que la bande de film (la) passe entre les deux postes (33-14 ; 22a) en étant en suspension.

18. Dispositif selon la revendication 16 ou 17,
caractérisé par le fait que le séchoir (8) comporte un poste de frittage ou d'agglomération par gélification (33-14) disposé au-dessus d'un poste de refroidissement (22a), la bande de film (1a) passant entre ces deux postes.

19. Dispositif selon la revendication 18,
caractérisé par le fait que, dans l'ensemble des canaux d'évacuation de l'air par aspiration (22), est disposé au moins un canal d'air en sens contraire (22a) dont la paroi supérieure perforée (23) est placée sur la piste (24) et qui, pour former le poste de refroidissement, est raccordé par sa face antérieure à un dispositif d'alimentation en air de refroidissement.

20. Dispositif selon la revendication 18 ou 19,
caractérisé par le fait que, dans la paroi supérieure (23), des trous (27) sont pratiqués par rangées.

21. Dispositif selon l'une ou plusieurs des revendications 18 à 20,
caractérisé par le fait qu'une courroie de transport (28) sans fin, entraînée et perméable à l'air repose sur la piste (24).

22. Dispositif selon la revendication 21,
caractérisé par le fait que la courroie de transport (28) est un tissu en fibres de verre téfalisé.

23. Dispositif selon la revendication 21 ou 22,
caractérisé par le fait que la piste (24) est plus large que la courroie de transport (28), de manière à ménager une bande latérale libre (30) de part et d'autre de la courroie de transport (28), présentant au moins une rangée de trous libres (31) dans la direction longitudinale de la piste (24).

24. Dispositif selon la revendication 23,
caractérisé par le fait que la courroie de transport (28) est plus large que la bande de film (1a) revêtue de points, la courroie de transport (28) présentant de ce fait à son tour une bande latérale libre (32) de part et d'autre de la bande de film (1a).

25. Dispositif selon l'une ou plusieurs des revendications 18 à 24,
caractérisé par le fait qu'au-dessus de la piste (24), des canaux d'alimentation en air (34) sont disposés à intervalles, transversalement à la direction de transport (1b).

26. Dispositif selon la revendication 25,
caractérisé par le fait que les canaux d'alimentation en air (34) ont la même forme que les canaux d'évacuation de l'air par aspiration (22) et que leurs parois (36) qui comportent les rangées de trous (37) sont disposées perpendiculairement à la piste (24).

27. Dispositif selon la revendication 25 ou 26,
caractérisé par le fait que, dans l'espace entre les canaux d'alimentation en air (34) sont disposés des canaux de circulation d'air (38) qui ont sensiblement les mêmes dimensions que les canaux d'alimentation en air et qui présentent, dans leur paroi (39) en regard de la piste (24), des fentes d'aspiration (40) s'étendant transversalement à la direction de transport (1b), la face antérieure des canaux d'alimentation en air (34) étant raccordée à des dispositifs d'alimentation en air et la face antérieure des canaux de circulation d'air (38) à des dispositifs d'aspiration de l'air.

28. Dispositif selon l'une ou plusieurs des revendications 16 à 27,
caractérisé par un dispositif d'étirage en largeur (2) disposé entre le dispositif de déroulement (1) et le dispositif d'impression.

29. Dispositif selon l'une ou plusieurs des revendications 16 à 28,
caractérisé par un dispositif de pulvérisation pour pulvériser de l'eau sur la surface du cylindre d'impression en caoutchouc (5).

30. Dispositif selon l'une ou plusieurs des revendications 16 à 29,
caractérisé par un poste de frittage, respectivement d'agglomération par gélification (9) placé en aval du séchoir (8).

31. Dispositif selon l'une ou plusieurs des revendications 16 à 30,
caractérisé par le fait qu'en aval du séchoir (8) est disposé un cylindre de refroidissement (13).

32. Dispositif selon l'une ou plusieurs des revendications 16 à 31,
caractérisé par le fait qu'en amont du poste de fritttage, (9) respectivement d'agglomération par gélification, est disposé un moyen d'étirage en largeur (15).

33. Dispositif selon l'une ou plusieurs des revendications 16 à 31,
caractérisé par le fait qu'en aval du poste de frittage, respectivement d'agglomération par gélification (9) est disposé un moyen d'étirage en largeur (17).

34. Dispositif selon l'une ou plusieurs des revendications 16 à 32,
caractérisé par le fait qu'en amont du poste d'enroulement (7) est disposé un moyen d'étirage en largeur (19).

35. Dispositif selon l'une ou plusieurs des revendications 16 à 34,
caractérisé par le fait que les moyens d'étirage en largeur (2, 15 et 19) sont des dispositifs à corde de maintien de la largeur.

36. Dispositif selon l'une ou plusieurs des revendications 16 à 35,
caractérisé par le fait que le moyen d'étirage en largeur (17) est un cylindre-banane.

37. Dispositif selon l'une ou plusieurs des revendications 16 à 36,
caractérisé par le fait que le poste de frittage, respectivement d'agglomération par gélification (9) comporte un cylindre de refroidissement (9a) à enveloppe refroidie au-dessus duquel est disposé un radiateur à infrarouge (10).

38. Dispositif selon la revendication 37,
caractérisé par le fait que le poste de frittage, respectivement d'agglomération par gélification (9) est disposé entre le cylindre de refroidissement (13) et le poste d'enroulement (7).

39. Dispositif selon l'une ou plusieurs des revendications 16 à 38,
caractérisé par le fait que le cylindre de refroidissement (13) est un cylindre à enveloppe refroidie sur la surface duquel est disposé un pan d'étoffe textile munie de poils, de préférence un velours.

40. Dispositif selon l'une ou plusieurs des revendications 16 à 39,
caractérisé par le fait que l'enveloppe du cylindre de refroidissement (9a) est en métal.
